# NOUVEAU FASCICULE DE BREVET EUROPEEN

(11) **EP 3 018 023 B2**
(45) Date de publication et mention de la décision concernant l'opposition: **17.06.2026**
(45) Mention de la délivrance du brevet: 30.12.2020
(21) Numéro de dépôt: 15193361.1
(22) Date de dépôt: 06.11.2015
(51) Int. Cl.: B60T 17/22

(54) **VÉHICULE FERROVIAIRE À DISPOSITIF D'OBSTACLE INTÉGRÉ ET PROCÉDÉ ASSOCIÉ**
SCHIENENFAHRZEUG MIT INTEGRIERTER HINDERUNGSVORRICHTUNG, UND ENTSPRECHENDES VERFAHREN
RAILWAY VEHICLE WITH INTEGRATED OBSTACLE DEVICE AND METHOD THEREFOR

(30) Priorité: 06.11.2014 FR 1460731
(43) Date de publication de la demande: 11.05.2016
(73) Titulaire: ALSTOM Holdings, 93400 Saint-Ouen-sur-Seine (FR)
(72) Inventeur: MARTIN, Jérôme, 17300 VERGEROUX (FR); CORNETTE, Régis, 17410 SAINT-MARTIN-DE-RE (FR); VERRIERE, Dominique, 17220 SAINT ROGATIEN (FR); CHASSE, Nicolas, 17690 ANGOULINS (FR)
(74) Mandataire: Lavoix

(56) Documents cités:
- WO-A1-03/081514
- CA-A1- 2 724 443
- CN-U- 202 080 263
- DE-A1- 102005 007 336
- DE-A1- 102005 029 956
- FR-A1- 2 456 023
- JP-A- 2009 029 234
- KR-A- 20110 002 642
- KR-A- 20120 103 188

## Description

La présente invention concerne un véhicule ferroviaire comprenant une caisse, au moins un bogie réunissant chacun au moins un essieu, une unité de contrôle de commande de freinage d'urgence reliée à une unité de freinage et à au moins un capteur de détection d'un obstacle pour la commande du freinage d'urgence.

Ce véhicule ferroviaire est adapté pour prévenir tout incident lors d'un heurt avec un obstacle se trouvant sur la voie ferrée. Des solutions antérieures de véhicule ferroviaire comportent un dispositif mécanique d'interception de l'obstacle placé devant l'essieu associé à une méthode de déclenchement du freinage d'urgence.

La demande de brevet canadien CA 2 724 443 A1 divulgue le basculement d'un état de fonctionnement normal vers un état de fonctionnement spécial qui permet la poursuite du voyage du véhicule ferroviaire jusqu'à la prochaine position d'arrêt sûre. Le dispositif de commande est conçu de telle sorte qu'il permet de prévenir ou d'interrompre un freinage d'urgence automatique, afin de poursuivre la conduite dans une zone dangereuse. Toutefois le brevet ne divulgue aucun dispositif mécanique d'interception ou de détection d'obstacle.

Un premier dispositif mécanique d'interception a été employé sur un véhicule ferroviaire de modèle « Incentro ». Le dispositif mécanique d'interception est formé d'un garde-corps passif et souple disposé devant l'essieu. Il est mécaniquement articulé par rapport à la structure du véhicule et sans connexion avec une unité de contrôle. Le freinage d'urgence est uniquement activable par l'opérateur.

Un second dispositif mécanique d'interception a été employé sur un véhicule ferroviaire de modèle « Citadis ». Le dispositif mécanique est composé d'un garde-corps mobile qui se déploie par déverrouillage d'un cran mécanique sous la commande d'un détecteur d'obstacle. En plus d'une possible activation manuelle par l'opérateur, le freinage d'urgence est activé automatiquement par le déploiement du garde-corps mobile.

Toutefois, de tels véhicules ne donnent pas entièrement satisfaction. Les dispositifs d'interception avec un détecteur d'obstacle engendrent des arrêts d'urgence intempestifs en présence de neige sur la voie ferrée.

Un but de l'invention est de concevoir un véhicule ferroviaire ayant un dispositif d'interception d'obstacle résolvant les dysfonctionnements répétitifs d'arrêt d'urgence en présence de neige.

A cet effet, l'invention a pour objet un véhicule ferroviaire du type précité, dans lequel :
l'unité de contrôle comporte un moyen de désactivation d'une commande d'un freinage d'urgence par le ou chaque capteur de détection,
l'unité de contrôle comporte un moyen de restauration propre à désamorcer le freinage d'urgence de l'unité de freinage à l'arrêt, le moyen de désactivation étant un commutateur disposé entre le capteur de détection et l'unité de freinage.

Suivant des modes particuliers de réalisation, le véhicule ferroviaire selon l'invention comprend l'une ou plusieurs des caractéristiques suivantes, prise(s) isolément ou suivant toute combinaison techniquement possible :
- il comprend un moyen d'actionnement du freinage d'urgence et l'unité de contrôle est propre à activer le freinage d'urgence sous la commande du moyen d'actionnement ;
- l'unité de contrôle comporte une interface homme-machine affichant des évènements collectés par l'unité de contrôle ;
- l'unité de contrôle comporte un enregistreur d'évènements propre à sauvegarder les informations collectées par l'unité de contrôle ;
- il comporte un ensemble de détection fixé à l'extrémité avant de la caisse du véhicule ferroviaire comprenant une poutre s'étendant transversalement à la voie ferrée, articulée par rapport à la caisse par une articulation de détection, le capteur de détection est un capteur de position de la poutre ;
- il comporte une signalisation représentatif de l'état du moyen de désactivation ;
- il comporte un garde-corps fixé entre l'ensemble de détection et l'essieu destiné à réceptionner l'obstacle, le garde-corps comprenant une barre s'étendant transversalement à la voie ferrée, et des moyens de maintien de la barre au repos ;
- le garde-corps comporte une articulation de sécurité entre la caisse et la barre, ainsi qu'un tampon élastique formant butée d'arrêt de la barre au repos ;
- il comporte un chasse-obstacle fixé sur le bogie entre le garde-corps et l'essieu, le chasse-obstacle étant une barre de rempart s'étendant transversalement à la voie ferrée, propre à empêcher tout contact de l'obstacle avec l'essieu.

L'invention sera mieux comprise à la lecture de la description qui va suivre, donnée uniquement à titre d'exemple, et faite en se référant aux dessins annexés sur lesquels :
- la figure 1 est une vue schématique d'un véhicule ferroviaire comprenant le dispositif d'interception d'obstacle selon l'invention,
- la figure 2 est une vue schématique du dispositif d'interception d'obstacle selon l'invention,
- la figure 3 est une vue schématique en vue de dessus d'un chasse-obstacle devant l'essieu selon l'invention, et
- la figure 4 est un diagramme du procédé associé au dispositif d'interception d'obstacle selon l'invention.

Dans tout ce qui suit, le sens d'arrière vers l'avant s'entend comme le sens allant d'une voiture passager vers une voiture motrice d'un véhicule ferroviaire. L'arrière se situe au niveau d'une voiture passager et l'avant se situe aux extrémités des voitures motrices d'un véhicule ferroviaire.

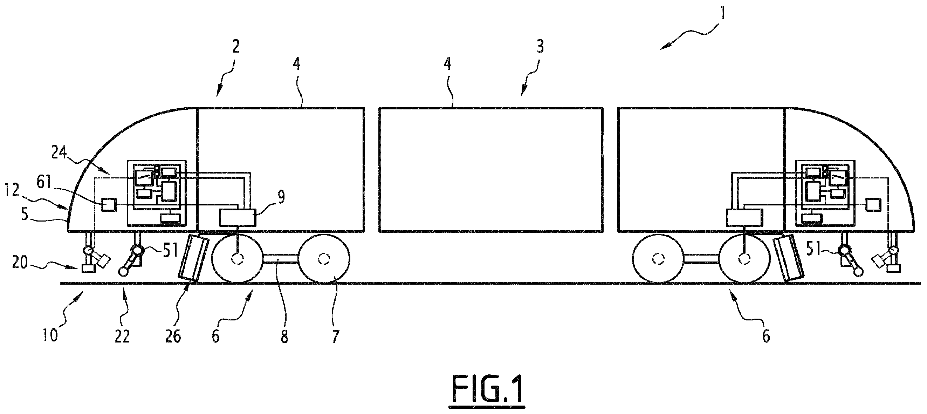

Le véhicule ferroviaire 1, illustré sur la figure 1, est un engin circulant sur une voie de chemin de fer comprenant une voiture motrice 2 à chaque extrémité et au moins une voiture passager 3.

Chaque voiture motrice 2 comprend une caisse 4 portant un carénage 5, un boggie 6 réunissant deux essieux 7 sur un châssis 8 et une unité de freinage 9.

La voiture motrice 2 comprend également un dispositif 10 d'interception d'obstacle et des moyens 12 de freinage d'urgence du véhicule ferroviaire.

Le carénage 5 est la première barrière protectrice d'obstacle. Il est propre à amortir et à s'interposer face à un obstacle pour le déplacer en dehors de la voie ferrée. Il délimite toutefois un espace entre la voie ferrée et la caisse 4.

Le dispositif 10 est fixé à chaque extrémité du véhicule ferroviaire 1, sous la caisse 4 en avant de l'essieu 7 du boggie 6 de la voiture motrice 2, comme illustré sur la figure 1.

Le dispositif 10 est destiné à détecter toute forme d'obstacles s'introduisant dans l'espace entre la voie ferrée et la caisse 4 du véhicule ferroviaire. Il est apte à réceptionner l'obstacle avant tout contact avec l'essieu 7. Il est également propre à transmettre l'ordre d'un freinage d'urgence à l'unité de freinage 9 lorsque cela est nécessaire.

En référence à la figure 1, le dispositif 10 comporte un ensemble de détection 20 fixé à l'extrémité avant de la voiture motrice 2, un garde-corps 22 fixé entre l'ensemble de détection 20 et l'essieu 7 et une unité de contrôle 24 propre à recevoir les informations de l'ensemble de détection 20 et à commander l'unité de freinage 9.

Le dispositif 10 comporte en outre un chasse-obstacles 26 fixé au bogie 6, entre l'essieu 7 et le garde-corps 22.

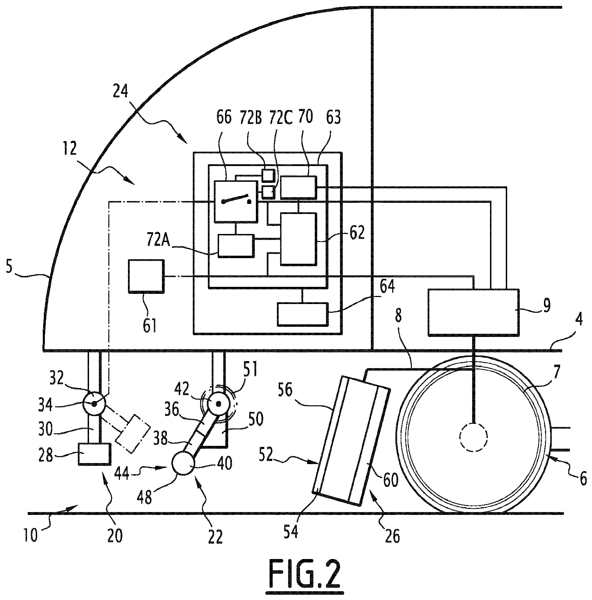

L'ensemble de détection 20 comporte, comme illustré sur la figure 2, une poutre 28 s'étendant transversalement à la voie ferrée. Elle est supportée par un bras 30 mobile par rapport à la caisse 4 grâce à une articulation 32 de détection. L'articulation 32 entre le bras 30 et la caisse 4 a au moins un degré de liberté en rotation autour d'un axe horizontal transversal à la voie ferrée.

L'articulation 32 de détection permet une rotation avantageusement comprise entre 0° et 45°.

Un capteur 34 relié à l'unité de contrôle 24 détecte les déplacements du bras 30 par rapport à la caisse 4. En cas de détection, le capteur 34 est propre à émettre un signal de détection d'obstacle correspondant à un état actif du capteur. Avantageusement, le capteur 34 est un capteur de fin de course électrique.

La poutre 28 est déplaçable entre une position inactive et une position active.

Dans sa position inactive, la poutre 28 est positionnée au plus proche de la voie ferrée. La poutre 28 est alors positionnée à une hauteur de la voie ferrée réduite à environ 20 mm lorsque la trajectoire de la voie est sensiblement concave et les voitures sont en charge maximale.

Dans sa position active, la poutre 28 est déplacée vers l'arrière par un obstacle à l'écart de sa position inactive.

Avantageusement, le bras 30 est précontraint par un ressort pour revenir sous l'action du ressort en position inactive depuis la position active en l'absence d'obstacle.

Le ressort de précontrainte est tel qu'une force égale ou supérieur à 50 N exercée sur la poutre 28 est suffisant à déplacer la poutre 28 jusqu'à sa position active.

Le garde-corps 22 fixé en arrière de l'ensemble de détection 20 est destiné à intercepter l'obstacle se trouvant sous la caisse 4 du véhicule ferroviaire 1.

Le garde-corps 22 comporte une barre mobile 36, prolongée vers la voie ferrée, sur toute sa longueur par une bavette 38 souple munie à l'extrémité de roulettes 40 faisant face à la voie ferrée. Il comporte une articulation 42 de sécurité entre la caisse 4 et la barre 36.

Le garde-corps 22 comprend en outre un tampon élastique 50 fixé sur la caisse 4 du véhicule ferroviaire et formant une butée d'arrêt de la barre 36. La barre 36 est dans la position de repos du garde-corps 22 en appui sur le tampon élastique 50.

Au repos, le garde-corps 22 est incliné d'un angle de 45° par rapport à l'axe vertical. L'articulation 42 de sécurité permet avantageusement un débattement angulaire à l'opposé du tampon élastique 50 sur une plage d'environ 45°.

De plus, la barre 36 est précontrainte par un ressort 51 pour que celle-ci soit maintenue en appui sur le tampon élastique 50 au repos.

Pendant la circulation du véhicule ferroviaire, le garde-corps 22 est en permanence dans une position de repos, sauf lorsque les roulettes 40 du bord inférieur 44 de la bavette 38 prennent appui sur le plan de la voie en béton ou sur les rails.

Au repos, le bord inférieur 44 du garde-corps 22 est positionné préférentiellement à une hauteur comprise entre 85 mm et 105 mm par rapport à la voie ferrée.

L'articulation 42 de sécurité est propre à offrir au moins un degré de liberté notamment en rotation selon l'axe transversal à la voie ferrée pour permettre à la barre mobile 36 du garde-corps 22 de suivre l'évolution de la topographie de la voie ferrée.

Les roulettes 40 sont positionnées à l'extrémité inférieure de la bavette 38. Elles comportent une bande de roulement 48 destinée à être en contact avec la voie ferrée pour certaines configurations topographiques. Les roulettes 40 sont rotatives autour de l'axe transversal à la voie ferrée et sont avantageusement réalisées en matériaux polymère.

Le chasse-obstacle 26 est la dernière barrière de protection de l'obstacle avant contact avec l'essieu 7. Il est fixé au bogie 6. Il s'étend transversalement à la voie ferrée et présente une inclinaison.

Le châsse-obstacle 26 comprend une barre 52 de rempart inclinée s'élevant de l'avant vers l'arrière depuis un bord 54 au plus proche de la voie ferrée.

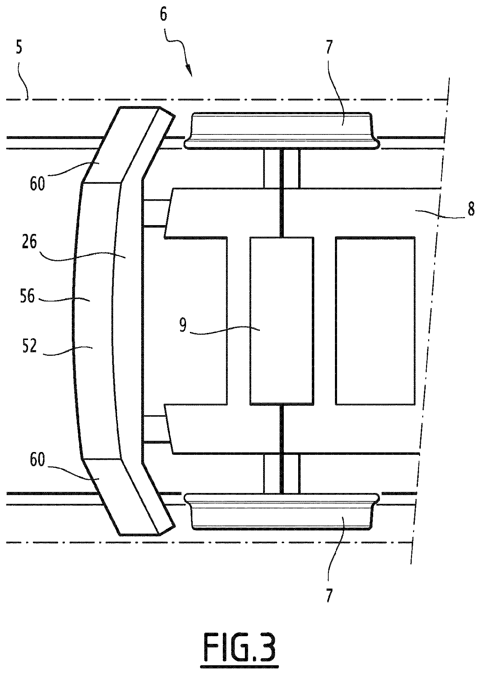

La barre 52 de rempart comporte une paroi centrale 56 et à chacune des extrémités latérales, une paroi latérale 60 présentant une orientation convergente vers un point en avant de la paroi centrale 56 comme illustré sur la figure 3.

Les parois latérales 60 dépassent transversalement l'essieu 7 tout en restant dans l'encombrement du carénage 5. Ainsi elles sont propres à évacuer l'obstacle en dehors du passage de l'essieu 7.

La barre 52 de rempart est réalisée en acier et présente un revêtement en bande de caoutchouc.

La barre 52 de rempart est inclinée d'un angle de 45° par rapport à la verticale. Le premier bord 54 de la barre 52 de rempart est positionné à une hauteur égale ou supérieure à 60 mm par rapport à la voie ferrée.

Les moyens 12 de freinage d'urgence comportent avantageusement un organe de commande manuel 61 tel qu'un levier de sélection relié à l'unité de contrôle 24.

L'unité de contrôle 24 est propre à commander le freinage d'urgence à l'unité de freinage 9.

Le freinage d'urgence est activée, au travers d'une liaison câblée, par l'organe de commande 61 ou par la détection d'un obstacle par le capteur 34 de l'ensemble de détection.

L'unité de contrôle 24 comporte un processeur 62, une mémoire embarquée et un logiciel embarqué mettant en œuvre une interface homme-machine 63. Un enregistreur 64 de l'unité de contrôle 24 sauvegarde l'ensemble des informations communiquées entre les éléments interconnectés à l'unité de contrôle 24.

L'interface homme-machine 63 de l'unité de contrôle 24 est destinée à aider le pilotage du véhicule ferroviaire 1.

L'interface homme-machine 63 comprend un moyen 66 de désactivation de la commande d'un freinage d'urgence entre le capteur 34 de l'ensemble de détection et l'unité de freinage 9.

Le moyen 66 de désactivation présente soit une configuration activée, soit une configuration désactivée.

Dans la configuration désactivée, le capteur 34 de l'ensemble de détection, le processeur 62 et l'unité de freinage 9 sont interconnectés.

Dans la configuration activée, le capteur 34 de l'ensemble de détection est déconnecté du processeur 62 et de l'unité de freinage 9.

Selon l'invention, le moyen 66 de désactivation est un commutateur interposé entre le capteur 34 et l'unité de freinage 9 qui lorsqu'il est en position active, permet de court-circuiter la détection d'obstacle par le capteur 34, inhibant ainsi la commande du freinage d'urgence depuis l'ensemble de détection 20.

Le processeur 62 est propre à recevoir les signaux en sortie du moyen de désactivation 66 et en sortie de l'organe de commande 61.

En outre, l'interface homme-machine 63 présente une signalisation visuelle 72 comprenant :
- un voyant lumineux 72A informant l'opérateur de l'état actif du capteur 34 lorsque le moyen 66 de désactivation n'est pas en configuration activée,
- une signalisation 72B informant l'opérateur de la configuration activée ou désactivée du moyen 66 de désactivation, et
- une signalisation 72C informant l'opérateur de la position active du capteur 34 lorsque le moyen 66 de désactivation est en configuration activée.

Le capteur 34 reste connecté à l'interface homme-machine 63 de l'unité de contrôle permettant de signaler à l'opérateur par le voyant lumineux 72A et la signalisation 72C quand le capteur 34 est passé en état actif.

L'interface homme-machine 63 comporte également un moyen de restauration 70 du freinage d'urgence. Le moyen de restauration 70 est relié par une liaison câblée à l'unité de freinage 9 et, après son actionnement, commande à l'unité de freinage 9 de désamorcer le freinage d'urgence. Le moyen de restauration 70 est également relié au processeur 62 afin de communiquer son état au processeur 62. Le voyant lumineux 72A reste allumé jusqu'à l'activation du moyen de restauration 70 du freinage d'urgence par le conducteur. En effet, après réception de l'état d'activation du moyen de restauration 70, le processeur 62 envoie un signal d'acquittement au voyant lumineux 72A.

L'organe de commande manuel 61 est relié en permanence au processeur 62 quelques soit l'état du moyen 66 de désactivation.

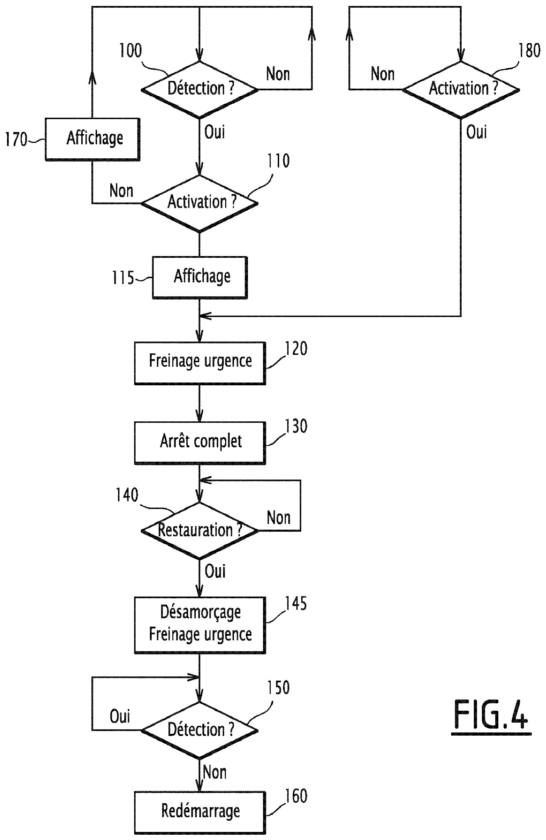

Un procédé de protection d'obstacle pour un véhicule ferroviaire 1, mis en œuvre à l'aide du dispositif 10 selon l'invention, va maintenant être décrit sur la figure 4.

Le véhicule ferroviaire 1 est en marche avant quand le processeur 62 effectue à l'étape 100 un test pour détecter la présence d'un signal de détection issu du capteur 34. En l'absence de signal, le test est reconduit. Si un signal est détecté à l'étape 100 par le déplacement du bras 30 suite à un choc avec un obstacle, l'étape 110 est mise en œuvre.

Un tel signal est détecté lors de la rencontre d'un obstacle placé sur la voie ferrée. Le contact avec l'obstacle s'effectue au niveau de la poutre 28 de l'ensemble de détection 20 disposé à l'extrémité avant du véhicule ferroviaire 1.

L'obstacle sur la voie ferrée s'insère sous la caisse 4 occasionnant un déplacement de la poutre 28 suivant l'axe longitudinal du véhicule ferroviaire 1 de l'avant vers l'arrière.

Le bras 30 pivote et actionne le capteur 34 de détection du déplacement 100, le capteur 34 passant en état actif.

Si le moyen 66 de désactivation est en configuration désactivée, le processeur 62 reçoit le signal de détection issu du capteur 34 lors de l'étape 110 :
- le signal de détection du capteur 34 est communiqué à l'unité de contrôle 24 affichant, à l'étape 115, la détection sur l'interface 63 au moyen du voyant lumineux 72A,
- le signal de détection est directement transmis à l'unité de freinage 9, ce qui engendre le freinage d'urgence à l'étape 120 jusqu'à l'arrêt complet à l'étape 130 du véhicule ferroviaire 1.

Pendant le freinage d'urgence, l'obstacle passe l'ensemble de détection 20 et progresse sous la caisse 4. Il est arrêté par le garde-corps 22 fixé derrière l'ensemble de détection 20. L'obstacle est amorti puis transporté en appui par la bavette 38 munie de roulettes 40 du garde-corps 22.

Si pour une configuration topographique de la voie ferrée défavorable et/ou pour une allure vive du véhicule ferroviaire 1, l'obstacle parvient à progresser sous le garde-corps 22, alors l'obstacle progresse jusqu'à entrer en contact avec le chasse-obstacles 26 rigide empêchant toute intrusion d'obstacles sous l'essieu 7. L'obstacle est entraîné en glissement sur la voie ferrée dans l'espace entre le garde-corps 22 et le chasse-obstacles 26 jusqu'à l'arrêt complet du véhicule ferroviaire 1.

A l'arrêt complet du véhicule ferroviaire 1, l'opérateur retire l'obstacle.

Un test en boucle est effectué à l'étape 140 pour détecter l'actionnement du moyen de restauration 70 de l'unité de contrôle. Il se poursuit tant que le moyen de restauration 70 n'est pas actionné.

Lors de l'actionnement du moyen de restauration 70, l'étape 145 de désamorçage du freinage d'urgence est mise en œuvre.

Si l'ensemble de détection 20 est en position inactive à l'étape 150, le véhicule ferroviaire 1 redémarre dans les mêmes conditions prévues initialement 160, le voyant 72A affichant une absence de détection. Sinon, un test est reconduit, le procédé retourne à l'étape 150.

En présence de neige sur la voie ferrée, le capteur 34 de l'ensemble de détection déclenche intempestivement des freinages d'urgence.

Pour y remédier, lorsque à l'étape 110, le moyen 66 de désactivation est en configuration activée, le signal transmis par le capteur 34 arrive à l'unité de contrôle 24, allume la signalisation 72C à l'étape 170, mais ne déclenche pas le freinage d'urgence à l'unité de freinage 9, l'algorithme passant directement à l'étape 100.

Le freinage d'urgence reste actionnable par le moyen 61 de freinage d'urgence à l'étape 180.

D'une manière générale, chaque information communiquée à l'unité de contrôle 24 est affichée de manière visible par la signalisation visuelle 72 présente sur l'interface 63.

En outre, les informations communiquées à l'unité de contrôle 24 sont sauvegardées par l'enregistreur 64 d'événements. Les données enregistrées sont avantageusement analysées par les opérateurs de maintenance pour vérifier le bon fonctionnement du véhicule ferroviaire 1 et du dispositif 10.

## Revendications

1. Véhicule ferroviaire (1) comprenant une caisse (4), au moins un bogie (6) réunissant chacun au moins un essieu (7), une unité de contrôle (24) de commande de freinage d'urgence reliée à une unité de freinage (9) et à au moins un capteur (34) de détection d'un obstacle pour la commande du freinage d'urgence
**caractérisé en ce que** l'unité de contrôle (24) comporte un moyen (66) de désactivation d'une commande d'un freinage d'urgence par le ou chaque capteur (34) de détection,
l'unité de contrôle (24) comportant un moyen de restauration (70) propre à désamorcer le freinage d'urgence de l'unité de freinage (9) à l'arrêt,
le moyen (66) de désactivation étant un commutateur disposé entre le capteur (34) de détection et l'unité de freinage (9).

2. Véhicule ferroviaire (1) selon la revendication 1, **caractérisé en ce qu'**il comporte un moyen (12) d'actionnement du freinage d'urgence et l'unité de contrôle (24) est propre à activer le freinage d'urgence sous la commande du moyen (12) d'actionnement.

3. Véhicule ferroviaire (1) selon l'une quelconque des revendications précédentes, **caractérisé en ce que** l'unité de contrôle (24) comporte une interface (63) homme-machine affichant des évènements collectés par l'unité de contrôle (24).

4. Véhicule ferroviaire (1) selon l'une quelconque des revendications précédentes, **caractérisé en ce que** l'unité de contrôle (24) comporte un enregistreur (64) d'évènements propre à sauvegarder les informations collectées par l'unité de contrôle (24).

5. Véhicule ferroviaire (1) selon l'une quelconque des revendications précédentes, **caractérisé en ce qu'**il comporte un ensemble de détection (20) fixé à l'extrémité avant de la caisse (4) du véhicule ferroviaire (1) comprenant une poutre (28) s'étendant transversalement à la voie ferrée, articulée par rapport à la caisse (4) par une articulation (32) de détection, le capteur (34) de détection est un capteur de position de la poutre (28).

6. Véhicule ferroviaire (1) selon l'une quelconque des revendications précédentes, **caractérisé en ce qu'**il comporte une signalisation (72B) représentatif de l'état du moyen (66) de désactivation.

7. Véhicule ferroviaire (1) selon l'une quelconque des revendications précédentes, **caractérisé en ce qu'**il comporte un garde-corps (22) fixé entre l'ensemble de détection (20) et l'essieu (7) destiné à réceptionner l'obstacle, le garde-corps (22) comprenant une barre (36) s'étendant transversalement à la voie ferrée, et des moyens (51) de maintien de la barre (36) au repos.

8. Véhicule ferroviaire (1) selon la revendication 7, **caractérisé en ce que** le garde-corps (22) comporte une articulation (42) de sécurité entre la caisse (4) et la barre (36), ainsi qu'un tampon élastique (50) formant butée d'arrêt de la barre (36) au repos.

9. Véhicule ferroviaire (1) selon l'une quelconque des revendications précédentes, **caractérisé en ce qu'**il comporte un chasse-obstacle (26) fixé sur le bogie (6) entre le garde-corps (22) et l'essieu (7), le chasse-obstacle (26) étant une barre (52) de rempart s'étendant transversalement à la voie ferrée, propre à empêcher tout contact de l'obstacle avec l'essieu (7).

## Patentansprüche

1. Schienenfahrzeug (1), welches aufweist eine Karosserie (4), mindestens ein Drehgestell (6), welches jeweilig mindestens einen Radsatz (7) verbindet, eine Steuereinheit (24) zum Steuern einer Schnellbremsung, welche mit einer Bremseinheit (9) verbunden ist, und mindestens einen Sensor (34) zum Detektieren eines Hindernisses zum Steuern der Schnellbremsung,
**dadurch gekennzeichnet, dass** die Steuereinheit (24) ein Mittel (66) zum Deaktivieren eines Befehls der Schnellbremsung mittels des oder jedes Sensors (34) zum Detektieren aufweist,
wobei die Steuereinheit (24) ein Mittel zum Zurückstellen (70) aufweist, welches imstande ist, die Schnellbremsung der Bremseinheit (9) im Stillstand zu deaktivieren,
wobei dass das Mittel (66) zum Deaktivieren ein Schalter ist, welcher zwischen dem Sensor (34) zum Detektieren und der Bremseinheit (9) angeordnet ist.

2. Schienenfahrzeug (1) gemäß Anspruch 1, **dadurch gekennzeichnet, dass** es ein Mittel (12) zum Betätigen der Schnellbremsung aufweist und dass die Steuereinheit (24) imstande ist, die Schnellbremsung unter dem Befehl des Mittels (12) zum Betätigen zu aktivieren.

3. Schienenfahrzeug (1) gemäß irgendeinem der vorherigen Ansprüche, **dadurch gekennzeichnet, dass** die Steuereinheit (24) eine Mensch-Maschine-Schnittstelle (63) aufweist, welche Ereignisse darstellt, welche mittels der Steuereinheit (24) gesammelt werden.

4. Schienenfahrzeug (1) gemäß irgendeinem der vorherigen Ansprüche, **dadurch gekennzeichnet, dass** die Steuereinheit (24) einen Schreiber (64) für Ereignisse aufweist, welcher imstande ist, die Informationen zu speichern, welche mittels der Steuereinheit (24) gesammelt werden.

5. Schienenfahrzeug (1) gemäß irgendeinem der vorherigen Ansprüche, **dadurch gekennzeichnet, dass** es eine Detektionsgruppe (20) aufweist, welche am vorderen Ende der Karosserie (4) des Schienenfahrzeugs (1) befestigt ist, welche einen Träger (28) aufweist, welcher sich quer zum Bahngleis erstreckt und welcher in Bezug auf die Karosserie (4) mittels eines Detektionsgelenks (32) gelenkverbunden ist, wobei der Sensor (34) zum Detektieren ein Sensor für die Position des Trägers (28) ist.

6. Schienenfahrzeug (1) gemäß irgendeinem der vorherigen Ansprüche, **dadurch gekennzeichnet, dass** es ein Signalisierungselement (72B) aufweist, welches repräsentativ für den Zustand des Mittels (66) zum Deaktivieren ist.

7. Schienenfahrzeug (1) gemäß irgendeinem der vorherigen Ansprüche, **dadurch gekennzeichnet, dass** es einen Körper-Schutz (22) aufweist, welcher zwischen der Gruppe zum Detektieren (20) und dem Radsatz (7) befestigt ist und welcher dazu bestimmt ist, das Hindernis aufzunehmen, wobei der Körper-Schutz (22) einen Holm (36), welcher sich quer zum Bahngleis erstreckt, und Mittel (51) zum Halten des Holms (36) im Ruhezustand aufweist.

8. Schienenfahrzeug (1) gemäß Anspruch 7, **dadurch gekennzeichnet, dass** der Körper-Schutz (22) ein Sicherheitsgelenk (42) zwischen der Karosserie (4) und dem Holm (36) sowie einen elastischen Puffer (50) aufweist, welcher einen Endanschlag des Holms (36) im Ruhezustand bildet.

9. Schienenfahrzeug (1) gemäß irgendeinem der vorherigen Ansprüche, **dadurch gekennzeichnet, dass** es einen Hindernisräumer (26) aufweist, welcher am Drehgestell (6) zwischen dem Körper-Schutz (22) und dem Radsatz (7) befestigt ist, wobei der Hindernisräumer (26) ein Schutzholm (52) ist, welcher sich quer zum Bahngleis erstreckt und welcher imstande ist, jeglichen Kontakt des Hindernisses mit dem Radsatz (7) zu verhindern.

## Claims

1. Railway vehicle (1) comprising a body (4), at least one bogie (6) each joining together at least one axle (7), a control unit (24) for triggering emergency braking, which control unit is connected to a braking unit (9) and to at least one obstacle detection sensor (34) for triggering emergency braking,
**characterised in that** the control unit (24) comprises a means (66) for deactivating a triggering of emergency braking by the or each detection sensor (34),
the control unit (24) comprising a restoring means (70) capable of deactivating the emergency braking of the braking unit (9) on stopping,
the deactivation means (66) being a switch arranged between the detection sensor (34) and the braking unit (6).

2. Railway vehicle (1) according to claim 1, **characterised in that** it comprises a means (12) for actuating the emergency braking, and the control unit (24) is capable of activating the emergency braking under the control of the actuating means (12).

3. Railway vehicle (1) according to any one of the preceding claims, **characterised in that** the control unit (24) comprises a human-machine interface (63) which displays events collected by the control unit (24).

4. Railway vehicle (1) according to any one of the preceding claims, **characterised in that** the control unit (24) comprises an events recorder (64) capable of saving the information collected by the control unit (24).

5. Railway vehicle (1) according to any one of the preceding claims, **characterised in that** it comprises a detection assembly (20) which is fixed to the front end of the body of the railway vehicle (1) and comprises a beam (28) which extends transversely to the railway track and is articulated relative to the body (4) by a detection joint (32), the detection sensor (34) is a position sensor for the beam (28).

6. Railway vehicle (1) according to any one of the preceding claims, **characterised in that** it comprises a signal (72B) representing the state of the deactivation means (66).

7. Railway vehicle (1) according to any one of the preceding claims, **characterised in that** it comprises a guard rail (22) which is fixed between the detection assembly (20) and the axle (7) and is to receive the obstacle, the guard rail (22) comprising a bar (36) extending transversely to the railway track, and means (51) for maintaining the bar (36) at rest.

8. Railway vehicle (1) according to claim 7, **characterised in that** the guard rail (22) comprises a safety joint (42) between the body (4) and the bar (36), as well as a resilient buffer (50) which forms a stop for the bar (36) at rest.

9. Railway vehicle (1) according to any one of the preceding claims, **characterised in that** it comprises an obstacle deflector (26) fixed to the bogie (6) between the guard rail (22) and the axle (7), the obstacle deflector (26) being a barrier (52) extending transversely to the railway track, capable of preventing any contact of the obstacle with the axle (7).
